## Europäisches Patentamt
## European Patent Office
## Office européen des brevets

(19)

(11) Veröffentlichungsnummer: **0 208 303**
**B1**

(12) **EUROPÄISCHE PATENTSCHRIFT**

(45) Veröffentlichungstag der Patentschrift: **03.10.90**

(51) Int. Cl.⁵: **C 02 F 3/28,** C 02 F 3/10

(21) Anmeldenummer: **86109341.7**

(22) Anmeldetag: **08.07.86**

(54) **Verfahren und Vorrichtung zur anaeroben biologischen Reinigung organisch belasteter Flüssigkeiten und/oder Flüssigkeits-Feststoffgemische.**

(30) Priorität: **12.07.85 DE 3524896**

(43) Veröffentlichungstag der Anmeldung:
**14.01.87 Patentblatt 87/03**

(45) Bekanntmachung des Hinweises auf die Patenterteilung:
**03.10.90 Patentblatt 90/40**

(84) Benannte Vertragsstaaten:
**AT BE CH DE FR GB IT LI NL**

(56) Entgegenhaltungen:
**EP-A-0 040 887**
**EP-A-0 100 953**

(73) Patentinhaber: **Linde Aktiengesellschaft**
**Abraham-Lincoln-Strasse 21**
**D-6200 Wiesbaden (DE)**

(72) Erfinder: **Morper, Manfred, Dr. rer. nat.**
**Alpspitzstrasse 28b**
**D-8130 Starnberg (DE)**

(74) Vertreter: **Schaefer, Gerhard, Dr.**
**Linde Aktiengesellschaft Zentrale**
**Patentabteilung**
**D-8023 Höllriegelskreuth (DE)**

Courier Press, Leamington Spa, England.

EP 0 208 303 B1

## Beschreibung

Die Erfindung betrifft ein Verfahren zur anaeroben biologischen Reinigung organisch belasteter Flüssigkeiten und/oder Flüssigkeits-Feststoffgemische, bei dem die Flüssigkeiten und/oder Flüssigkeits-Feststoffgemische durch einen Reaktor mit einem aus Trägerelementen für Mikroorganismen gebildeten Bett geleitet werden und bei dem das Bett von Zeit zu Zeit regeneriert wird, sowie eine Vorrichtung zur Durchführung des Verfahrens.

Bei der anaeroben mikrobiellen Umwandlung von organischem Substrat weitgehend in Methan und Kohlendioxid ist ein wesentliches Problem dadurch gegeben, daß bei komplex zusammengesetztem Substrat ein Teil der als CSB ausgedrückten organischen Fracht in schwer metabolisierbarer Form, wie z.B. als ungelöste Feststoffe, Polymere oder polykondensierte Aromaten, vorliegt, und diese Stoffe durch fermentative Bakterien erst in angreifbare Teile zersetzt werden müssen, wodurch lange Reaktionszeiten und großvolumige Reaktoren erforderlich sind. Zur Verkürzung der Reaktionszeiten werden deshalb anaerobe Hochleistungsreaktoren eingesetzt, deren aktive Biomasse auf Trägerelementen fixiert ist. Aufgrund der Fixierung der Biomasse auf den Trägerelementen wird dabei ein hoher Rückhaltungsgrad der nur langsam nachwachsenden anaeroben Biomasse erreicht, wodurch in solchen Reaktoren im Prinzip hohe Raumabbauleistungen erzielt werden können. Dabei besteht jedoch die Gefahr, daß durch mit dem Substrat eingeschleppte Feststoffe oder durch die sich vermehrende Biomasse Hohlräume verstopfen. Die Folge ist eine Leistungsverminderung, da so einerseits ungenützte Toträume entstehen, wo kaum noch ein Stoffumsatz stattfindet, und andererseits durch Kanalbildungen Kurzschlußströme entstehen, in denen die zu behandelnde Flüssigkeit oder das zu behandelnde Flüssigkeits-Feststoffgemisch den Reaktor ohne intensiven Kontakt mit der Biomasse und somit ohne nennenswerten Abbau durchläuft. Es ist daher notwendig, von Zeit zu Zeit Verstopfungen im Reaktor zu beseitigen und Kurzschlußkanäle zu zerstören, um die Leistungsfähigkeit des Reaktors zu erhalten. Eine Möglichkeit hierzu ist das Durchpressen eines Reinwasserstromes durch das mit den Trägerelementen gebildete Bett des Reaktors. Abgesehen vom zusätzlichen apparativen Aufwand für die Spülwassereinleitung ist die Wirksamkeit dieser Methode zweifelhaft, da das Spülwasser sich im Reaktor den Weg des geringsten Widerstandes suchen und vorwiegend über ohnehin offene Fließwege durch das mit den Trägerelementen gebildete Bett hindurchströmen wird, so daß verstopfte Bereiche ausgespart bleiben.

Aus der EP—A—0 100 953 ist ein Festbettreaktor zur anaeroben Behandlung von Klärschlamm oder mit organischen Stoffen stark belasteten Flüssigkeiten bekannt. Der Festbettreaktor weist ein Rohrbündel aus kunststoffrohren auf, deren Wandungen als Siedlungsfläche für die Mikroorganismen dienen. Normalerweise sind die Rohre im Betrieb nicht bis oben gefüllt. Wenn eines der Rohre verstopfen sollte, so wird dieses höher gefüllt als die übrigen Rohre, so daß im verstopften Rohr ein hydrostatischer Druck entsteht, der die Tendenz hat, das Rohr freizulegen.

Diese Regeneriermethode funktioniert jedoch nur bei einem Festbettreaktor, bei dem die zu behandelnde Flüssigkeit bzw. der Schlamm durch Rohre geleitet wird. Die Methode ist nicht anwendbar, wenn das Festbett beispielsweise aus einer Schüttung von Trägerelementen besteht.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise ohne Beeinträchtigung des Reaktorbetriebs eine Regenerierung des mit den Trägerelementen gebildeten Betts und damit unter Einhaltung einer hohen Raumabbauleistung eine hohe Betriebsstabilität des Reaktors erreicht werden kann.

Diese Aufgabe wird erfindungsgemäß dadurch gelöst, daß für die Regenerierung der Druck im Reaktor durch Unterbrechen der Gasabfuhr aus dem Reaktor zunächst erhöht und nach Erreichen eines vorgewählten Überdrucks auf den ursprünglichen Wert entspannt wird.

Mit der Druckerhöhung im Reaktor wird auch die Konzentration der in der zu behandelnden Flüssigkeit und/oder in dem Flüssigkeits-Feststoffgemisch gelösten Gase erhöht. Wird dann nach Erreichen eines vorgewählten Überdrucks, der gegebenenfalls über einen gewissen Zeitraum aufrechterhalten wird, der Druck im Reaktor auf den ursprünglichen Wert entspannt, ist die Flüssigkeit und/oder das Flüssigkeits-Feststoffgemisch momentan an Gas übersättigt, wodurch zur Ausbildung des Gleichgewichtszustandes Gasblasen aus derübersättigten Flüssigkeit austreten. Dabei bilden sich die Gasblasen bevorzugt an den feststoffhaltigen, d.h. verstopften Stellen des aus Trägerelementen gebildeten Bettes durch Blasenkoagulation. Kurzzeitig durchströmt so ein intensiver Gasstrom den Reaktor von unten nach oben und reißt Verstopfungen auf und zerstört die zwischen den Verstopfungen ausgebildeten Kanäle. Außerdem werden dadurch die Trägerelemente des Betts in Bewegung versetzt und lösen so entstandene Toträume auf.

Da die Druckerhöhung im Reaktor durch Unterbrechen der Gasabfuhr aus dem Reaktor erreicht wird, wird die Beseitigung von Verstopfungen und die Zerstörung von Kanälen in dem durch die Trägerelemente gebildeten Bett durch das beim anaeroben Abbau entstehende Biogas selbst herbeigeführt, so daß zur Aufrechterhaltung der Reaktorfunktionsfähigkeit keine Fremdstoffe, wie z.B. inerte Spülgase oder Spülwasser, eingesetzt werden müssen und darüber hinaus der Reaktorbetrieb auch während der Regenerationsphase voll aufrechterhalten werden kann.

Außerdem ist dazu auch nur ein relativ geringer apparative Aufwand erforderlich, da zur Druckerhöhung lediglich ein Absperrventil in der Abgasleitung des Reaktors erforderlich ist.

Je nach Ausbildung des Reaktors wird schließlich durch die Druckerhöhung bei unterbrochener Gasabfuhr der Flüssigkeitsstand im Reaktor erniedrigt. Wird beispielsweise die behandelte Flüssigkeit und/oder das behandelte Flüssigkeits-Feststoffgemisch über innerhalb und/oder außerhalb des Reaktors angeordnete Steigrohre abgezogen, wird die Flüssigkeit und/oder das Flüssigkeits-Feststoffgemisch bei Unterbrechen der Gasabfuhr aus dem Reaktor durch das sich im Kopfraum des Reaktors sammelnde Biogas allmählich in die Steigrohre verdrängt, wobei gleichzeitig der Druck im Reaktor und damit die Gaslöslichkeit in der Flüssigkeit ansteigt. Wird dann der Druck im Reaktor durch Wiederaufnahme der Gasabfuhr entspannt, erfolgt ein plötzlicher Niveauausgleich zwischen den Steigrohren und dem Reaktorraum, wodurch eine intensive momentane Flüssigkeitsströmung in dem durch die Trägerelemente gebildete Bett erzeugt wird, die die Wirkung der nach der Druckentspannung aufsteigenden Gasblasen unterstützt.

Ist der Reaktor ohne Steigrohre zum Abziehen der behandelten Flüssigkeiten und/oder Flüssigkeits-Feststoffgemischen ausgebildet, ist es auch von Vorteil, die Druckerhöhung teilweise bei Unterbrechen der Flüssigkeitszufuhr zum und der Flüssigkeitsabfuhr aus dem Reaktor durchzuführen. Dadurch kann in dem Reaktor aufgrund des weitergehenden anaeroben Abbauprozesses und des dabei entstehenden Biogases auf einfache Weise ein relativ hoher Überdruck erzeugt werden, bei dessen Entspannung dann ein intensiver Gasaustritt aus der Flüssigkeit und/oder dem Flüssigkeits-Feststoffgemisch erfolgt.

Zweckmäßigerweise wird der Überdruck auf 1 bis 10 bar eingestellt.

Als Flüssigkeiten und/oder Flüssigkeits-Feststoffgemische, die mit dem erfindungsgemäßen Verfahren behandelt und zur Fäulgaserzeugung genutzt werden können, kommen vor allem städtische und industrielle Abwässer, wie z.B. Abwässer aus Tierkörperverwertungsanstalten, Brauereien oder aus der Lebensmittelindustrie, Abwasserschlämme sowie organische Rest- und Abfallstoffe in Frage, wobei für die Verarbeitung organischer Feststoffe genügend Zell- und Oberflächenwasser vorhanden sein muß.

Eine Vorrichtung zur Durchführung des Verfahrens umfaßt einen Reaktor, der eine Zuleitung für zu behandelnde und eine Ableitung für behandelte Flüssigkeiten und/oder Flüssigkeits-Feststoffgemische, eine Gasableitung sowie ein Bett aus Trägerelementen für anaerobe Mikroorganismen aufweist. Erfindungsgemäß ist ein solcher Reaktor dadurch gekennzeichnet, daß in der Zuleitung und in der Ableitung für Flüssigkeiten und/oder Flüssigkeits-Feststoffgemische sowie in der Gasableitung je ein Absperrventil angeordnet ist, im Reaktor Meßeinrichtungen für den Druck und/oder den Flüssigkeitsstand vorhanden sind und das Absperrventil in der Gasableitung sowie gegebenenfalls die Absperrventile in der Zuleitung und der Ableitung für Flüssigkeiten und/oder Flüssigkeits-Feststoffgemische in Abhängiget eines mit den Meßeinrichtungen festgestellten Drucks im Reaktor betätigbar sind.

Für einen sicheren Betrieb des Reaktors ist es zweckmäßig, wenn die Meßeinrichtungen an eine Regel- und/oder Steuereinheit angeschlossen und die Absperrventile über die Regel- und/oder Steuereinheit betätigbar sind. In der Regel- und Steuereinheit kann dann ein vorgegebener Überdruck eingestellt werden. Steigt bei einem Schließen des Absperrventils in der Gasableitung der Druck im Reaktor, wird der Druckanstieg über die Meßeinrichtung an die Regel- und/oder Steuereinheit weitergeleitet. Bei Erreichen des vorgegebenen Druckwertes öffnet dann die Regel- und/oder Steuereinheit das Absperrventil in der Gasableitung und der Druck sinkt auf den ursprünglichen Wert ab, wobei die sich bei der Druckerhöhung in der Flüssigkeit bzw. dem Flüssigkeits-Feststoffgemisch lösenden Gasblasen plötzlich freigesetzt werden. Die Regel- und/oder Steuereinheit kann auch dazu herangezogen werden, daß sie in regelmäßigen Zeitabständen oder aufgrund von Meßdaten aus dem Reaktor das Schließen der Absperrventile zur Druckerhöhung im Reaktor übernimmt.

In der Zeichnung ist ein Ausführungsbeispiel eines zur Durchführung des erfindungsgemäßen Verfahrens geeigneten Reaktors schematisch dargestellt.

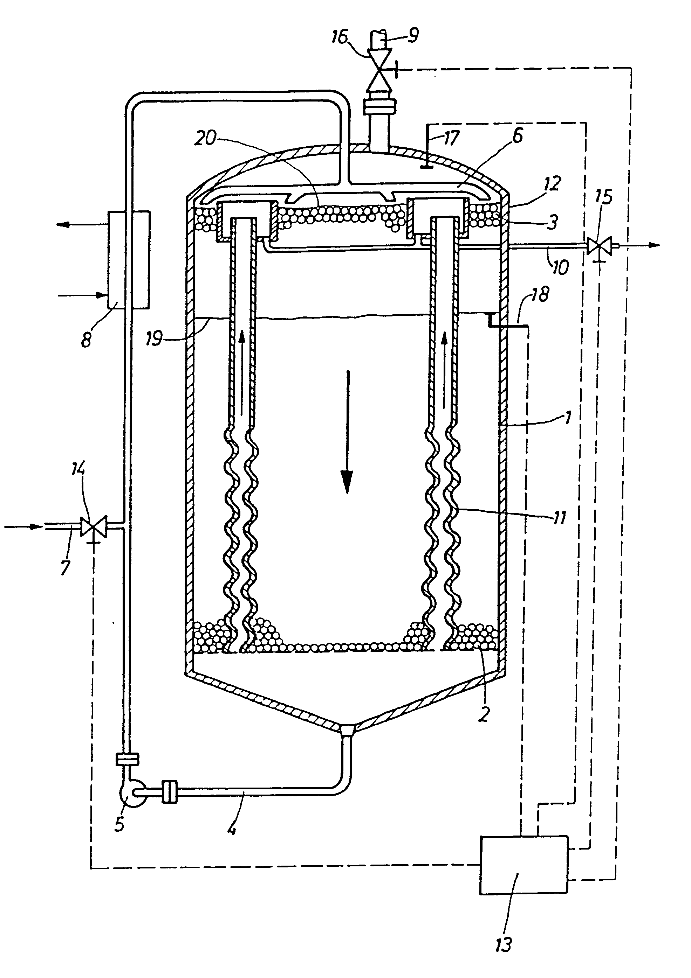

In der Figur 1 ist mit 1 ein unter anaeroben Bedingungen betriebener, geschlossener Reaktor bezeichnet, in dem auf einem im unteren Bereich vorhandenen Sieb- oder Gitterboden 2 ein Filterbett 3 aus Trägerelementen für anaerobe Mikroorganismen angeordnet ist. Vom Bodenbereich des Reaktors 1 unterhalb des Sieb- oder Gitterbodens 2 führt eine Rücklaufleitung 4 mit Pumpe 5 zu einer im oberen Bereich des Reaktors 1 über dem Filterbett 3 angeordneten Verteileinrichtung 6. An die Rücklaufleitung 4 ist eine Zuleitung 7 für zu behandelnde Flüssigkeiten oder zu behandelnde Flüssigkeits-Feststoffgemische angeschlossen, so daß zu behandelndes und teilbehandeltes Substrat über die Verteileinrichtung 6 von oben nach unten durch das Filterbett 3 des Reaktors 1 strömt. Zur Aufrechterhaltung der für den anaeroben Prozeß günstigsten Temperaturen ist in der Rücklaufleitung 4 ein Wärmetauscher 8 angeordnet. Beim anaeroben Abbauprozeß entstehendes Faulgas wird über eine im Kopfbereich des Reaktors 1 vorgesehene Gasableitung 9 abgeleitet, während behandeltes Substrat über eine Ableitung 10 abgezogen wird.

Das Filterbett 3 ist im vorliegenden Fall als Festbett gezeichnet und kann beispielsweise aus Sand, Blähton, Schlacke, Aktivkohle, Kunststoffringen oder aus vorzugsweise offenzelligen oder retikulierten Schaumstoffelementen, wie Polyurethan- Polyäthylen- oder Polypropylenelementen, oder aus Mischungen der einzelnen Materialien bestehen. Werden Schaumstoffe als Filterelemente verwendet, sollte sich die Größe der Poren zwischen 0,1 und 3 mm bewegen, so daß sichergestellt ist, daß die anaeroben Mikroorganismen nicht nur auf der Oberfläche der Filterelemente haften, sondern auch bis ins Innere der Filterelemente hineinwachsen. Auf diese Weise kann die Konzentration der aktiven Biomasse äußerst hoch gehalten werden.

Statt der Ausbildung eines Festbetts besteht darüber hinaus bei Verwendung von schwimmfähigen Filterelementen auch die Möglichkeit ein Fließbett zu erzeugen. Infolge des Auftriebs der Filterelemente gelangen diese dann trotz der Abwärtsströmung nicht bis zum unteren Ende des Reaktors.

Um ein Ausschwemmen von nicht auf den Trägerelementen des Filterbettes 3 fixierte Biomasse aus dem Reaktor zu vermeiden, ist das Filterbett 3 von mindestens einem Steigrohr 11 durchsetzt, das unten den Gitter- oder Siebboden 2 durchstößt und das im oberen Bereich des Reaktors 1 an die Ableitung 10 für behandeltes Substrat angeschlossen ist. Im dargestellten Fall ist das Steigrohr 11 oben offen ausgebildet und von einem ebenso oben offenen, mit der Ableitung 10 in Verbindung stehenden Auffangbehälter 12 umgeben, so daß die aufsteigende Flüssigkeit aus dem Steigrohr 11 in den Auffangbehälter 12 überströmt und aus diesem in die Ableitung 10 gelangt. Die Verteileinrichtung 6 für zu behandelndes Substrat ist dabei so über dem Steigrohr 11 und dem Auffangbehälter 12 angeordnet, daß das zu behandelnde Substrat sich nicht mit dem behandelten Substrat vermischen kann.

Durch die oben offene Ausbildung des Steigrohres 11 und die Überströmung von behandeltem Substrat aus dem Steigrohr 11 in den Auffangbehälter 12 besteht die Möglichkeit, sich während der Aufstiegsphase durch das Steigrohr 11 bildendes Faulgas nach oben aus dem behandelten Substrat abzuleiten.

Dabei findet während des Flüssigkeitsaufstieges durch das Steigrohr 11 nicht nur ein weiterer Abbauprozeß aufgrund der in der Flüssigkeit vorhandenen suspendierten und eventuell im Steigrohr fixierten Biomasse statt, sondern die nicht fixierte Biomasse sedimentiert allmählich und setzt sich nach unten in den unteren Bereich des Reaktors 1 ab. Von diesem gelangt die abgesetzte Biomasse in die Rücklaufleitung 4. Ein Ausschwemmen von nicht fixierter Biomasse wird somit durch die Anordnung des Steigrohres vermieden, so daß die Gesamtkonzentration an im Reaktor vorhandener Biomasse äußerst hoch ist.

Durch mit dem zu behandelnden Substrat eingeschleppte Feststoffe oder durch die sich vermehrende Biomasse besteht die Gefahr, daß die Hohlräume zwischen den Trägerelementen des Filterbettes 3 verstopfen. Die Folge wäre eine Leistungsverminderung, da so einerseits ungenützte Toträume entstehen, wo kaum noch Stoffumsatz stattfindet, andererseits sich durch Kanalbildungen Kurzschlußströme aus bilden, in denen das Substrat den Reaktor ohne intensiven Kontakt mit de Biomasse und daher ohne nenneswerten Abbau durchläuft. Zur Wiederherstellung der vollen Leistungsfähigkeit wird der Druck im Reaktor erhöht und nach Erreichen eines vorgewählten Überdrucks auf den ursprünglichen Wert entspannt. Dazu wird zweckmäßigerweise in einer schwächer belasteten Periode das Absperrventil 16 in der Gasableitung 9 geschlossen. Durch das weiter produzierte Gas erhöht sich der Druck im Gasraum des Reaktors. Dadurch wird über die Steigrohre 11 Flüssigkeit aus dem Reaktor 1 verdrängt. Der Flüssigkeitsspiegel sinkt von der ursprünglichen Füllstandshöhe 20 um einen einstellbaren Wert auf die Flüssigkeitsstandhöhe 19. Zur Feststellung eines vorzugebenden Überdrucks sind im Reaktor Meßeinrichtungen 17, 18 vorhanden, über die der Druck im Gasraum des Reaktors und die Füllstandshöhe der Flüssigkeit im Reaktor ermittelt werden kann. Diese Meßeinrichtungen 17, 18 sind zweckmäßigerweise an eine Regel- und/oder Steuereinheit 13 angeschlossen. Über die Regel- und Steuereinheit 13 angeschlossen. Über die Regel- und Steuereinheit 13 wird dann das Absperrventil 16 in der Gasableitung 9 bei oder nach Erreichen des vorgegebenen Überdrucks im Reaktor 1 geöffnet. Durch die Druckerhöhung erhöht sich die Gaslöslichkeit in der Flüssigkeit. Wird das Absperrventil 16 in der Gasleitung 9 geöffnet, treten Gase in Form von Blasen aus der übersättigten Flüssigkeit aus, wobei sich die Blasen bevorzugt an den feststoffhaltigen, d.h. verstopften Stellen im Filterbett 3 bilden. Kurzzeitig durchströmt, so ein intensiver Gasstrom den Reaktor von unten nach oben und reißt Verstopfungen auf und zerstört Kanäle. Ebenso geraten die Elemente der Schüttung in Bewegung und lösen so entstandene Toträume auf. Bei der plötzlichen Druckentspannung gleichen sich auch die Flüssigkeitsspiegel zwischen den Steigrohren 11 und dem Innenraum des Reaktors 1 wieder aus und der Flüssigkeitsspiegel im Reaktor 1 steigt von der unteren Flüssigkeitsstandhöhe 19 auf die ursprüngliche Flüssigkeitsstandhöhe 20. Dabei wird das Filterbett 3 kurzzeitig durch die schnell von unten nach oben fließende Flüssigkeit aufgewirbelt, wodurch ebenso die Verstopfungen und Kanäle beseitigt werden. Zum Schließen des Absperrventils 16 in der Gasableitung 9 kann ebenso die Regel- und/oder Steuereinheit 13 herangezogen werden. Dazu kann diese beispielsweise mit einer Zeitschaltuhr ausgerüstet sein, so daß das Absperrventil 16 periodisch in gewissen Zeitabständen geschlossen wird. Statt dessen besteht auch die Möglichkeit, der Regel- und/oder Steuereinheit 13 die Meßdaten einer im Reaktor angeordneten Meßeinrichtung zur Erfassung des Durchflußwiderstandes einzugeben und in Abhängigkeit dieser Meßdaten das Absperrventil 16 in der Gasableitung 9 von der Regel- und/oder Steuereinheit 13 schließen zu lassen.

Darüber hinaus besteht auch die Möglichkeit, zusätzlich zur Gasableitung 9 die Zuleitung 7 und die Ableitung 10 für Flüssigkeiten und/oder Flüssigkeits-Feststoffgemische mittels Absperrventilen 14, 15 über die Regelungs- und/oder Steuereinheit 13 zu schließen. Dadurch kann in kurzer Zeit ein hoher Gasdruck im Reaktor aufgebaut werden. Bei abgesperrter Ableitung 10 kann dann allerdings keine Flüssigkeit mehr aus dem Reaktionsraum verdrängt werden, so daß ein Aufwirbeln des Filterbettes 3 mit Hilfe einer nach oben gerichteten Flüssigkeitsströmung bei einer Druckentspannung nicht mehr möglich ist.

Anstelle des in der Zeichnung dargestellten Reaktors 1 kann selbstverständlich auch jeder beliebig ausgebildete Anaerobreaktor mit einem Filterbett aus Trägerelementen für die anaerobe Mikroorganismen mit der gezeigten Absperrung der Gasableitung zur Erzeugung einer Druckerhöhung im Reaktor ausgestattet werden.

Nachfolgend sind zwei Zahlenbeispiele angegeben, wobei in beiden Fällen nur der $CO_2$-Anteil des in einem Anaerob reaktokr anfallenden Biogases berücksichtigt ist, da $CO_2$ eine besonders gute Wasserlöslichkeit aufweist. Prinzipiell gelten die Aussagen auch für das Begleitgas Methan.

Ausgegangen wird im ersten Zahlenbeispiel von einem in der Zeichnung dargestellten Anaerobreaktor mit einem Volumen von 1000 m³ und einer Höhe von 7 m und der Behandlung von Brennereiabwasser, bei der ein Gas mit ca. 55% $CH_4$ und 45% $CO_2$ anfällt.

Die Löslichkeit von $CO_2$ bei 35°C, 1 Atmosphäre und 45% $CO_2$-Anteil beträgt 0,25 Nm³ Gas/m³ Wasser. Wird das Absperrventil 16 in der Gasableitung 9 geschlossen, sinkt der Flüssigkeitsspiegel von der ursprünglichen Flüssigkeitsstandhöhe 20 um 1,5 m auf die untere Flüssigkeitsstandhöhe von 19. Dabei erhöht sich die Löslichkeit von $CO_2$ auf ca. 0,37 Nm³ Gas/m³ Abwasser. Bei einer anschließenden Druckverminderung durch Öffnen des Absperrventils 16 entweichen aus dem zu behandelnden Abwasser 0,12 Nm³ Gas/m³ Wasser. Bei einem Volumen von ca. 1000 m³ durchströmen in wenigen Sekunden 120 Nm³ $CO_2$ (=135 m³ $CO_2$ bei 35°C) den Reaktor von unten nach oben Gleichzeitig steigt der Flüssigkeitsspiegel auf den ursprünglichen Flüssigkeitsstand 20. Durch das aufsteigende Gas und die aufsteigende Flüssigkeit werden Verstopfungen und Kanäle in dem Filterbett 3 zerstört.

Im zweiten Beispiel werden gleichzeitig mit dem Absperrventil 16 der Gasableitung 9 auch die Absperrventile 14, 15 in der Zuleitung 7 und in der Ableitung 10 des Reaktors geschlossen, wodurch die Abwasserzufuhr vorübergehend abgestellt ist. Danach wird eine Druckerhöhung auf 4 bar abgewartet und dann das Absperrventil 16 in der Gasableitung 9 geöffnet.

Bei dieser Verfahrensweise erhöht sich die $CO_2$ Löslichkeit von 0,25 Nm³/m³ Wasser auf ca. 0,9 Nm³/m³ Wasser, so daß bei einer Druckverminderung 0,65 Nm³ $CO_2$/m³ Abwasser entweichen. Bei 1000 m³ Reaktorvolumen gasen auf diese Weise in kurzer Zeit ca. 650 Nm³ $CO_2$ (=733 m³ $CO_2$ bei 35°C) aus, und zerstören Verstopfungen und Kanäle. Danach wird die Beschickung mit Abwasser wieder aufgenommen.

## Patentansprüche

1. Verfahren zur anaeroben biologischen Reinigung organisch hochbelasteter Flüssigkeiten und/oder Flüssigkeits-Feststoffgemische, bei dem die Flüssigkeiten und/oder Flüssigkeits-Feststoffgemische durch einen Reaktor mit einem aus Trägerelementen für Mikroorganismen gebildeten Bett geleitet werden und bei dem das Bett von Zeit zu Zeit regeneriert wird, dadurch gekennzeichnet, daß für die Regenerierung der Druck im Reaktor durch Unterbrechen der Gasabfuhr aus dem Reaktor zunächst erhöht und nach Erreichen eines vorgewählten Überdrucks auf den ursprünglichen Wert entspannt wird.

2. Verfahren nach Anspruch 1, dadurch gekennzeichnet, daß die Druckerhöhung teilweise bei Unterbrechen der Flüssigkeitszufuhr zum und der Flüssigkeitsabfuhr aus dem Reaktor durchgeführt wird.

3. Verfahren nach Anspruch 1 oder 2, dadurch gekennzeichnet, daß der Überdruck auf 1 bis 10 bar eingestellt wird.

4. Vorrichtung zur Durchführung des Verfahrens nach einem der Ansprüche 1 bis 3 mit einem Reaktor, der eine Zuleitung für zu behandelnde und eine Ableitung für behandelte Flüssigkeiten und/oder Flüssigkeitsfeststoffgemische, eine Gasableitung sowie ein Bett aus Trägerelementen für anaerobe Mikroorganismen aufweist, dadurch gekennzeichnet, daß in der Zuleitung 7 und in der Ableitung 10 für Flüssigkeiten und/oder Flüssigkeitsfeststoffgemische sowie in der Gasableitung 9 je ein Absperrventil 14, 15, 16 angeordnet ist, im Reaktor 1 Meßeinrichtungen 17, 18 für den Druck und/oder den Flüssigkeitsstand vorhanden sind und das Absperrventil 16 in der Gasableitung 9 sowie gegebenenfalls die Absperrventile 14, 15 in der Zuleitung 7 und der Ableitung 10 für Flüssigkeiten und/oder Flüssigkeitsfeststoffgemische mit den Drück- und/oder Flüssigkeitsstands-Meßeinrichtungen 17, 18 im Reaktor 1 für steuerung und/oder Regelung verknüpft sind.

5. Vorrichtung nach Anspruch 4, dadurch gekennzeichnet, daß die Meßeinrichtungen 17, 18 an eine Regel- und/oder Steuereinheit 13 angeschlossen sind und die Absperrventile 14, 15, 16 unit der Regel- und/oder Steuereinheit 13 verknüpft sind.

## Revendications

1. Procédé pour l'épuration/purification biologique anaérobie de liquide et/ou mélange liquide/solide fortement chargés en matières organiques dans lequel le liquide et/ou mélange liquide/solide traversent un réacteur avec un lit formé d'éléments de support pour micro-organismes et dans lequel le lit est régénéré de temps en temps, caractérisé en ce que, pour la régénération, la pression dans le réacteur est d'abord augmentée par arrêt de l'évacuation de gaz hors du réacteur et est ensuite redétendue à la valeur initiale après avoir atteint une valeur prédéterminée de surpression.

2. Procédé selon la revendication 1, caractérisé en ce que l'élévation de pression est obtenue partiellement par interruption de l'alimentation du réacteur en liquide et par évacuation de liquide hors du réacteur.

3. Procédé selon la revendication 1 ou la revendication 2, caractérisé en ce que la surpression est réglée à une valeur comprise entre 1 et 10 bars.

4. Dispositif pour la mise en oeuvre du procédé selon l'une des revendications 1 à 3, au moyen d'un réacteur qui comporte une canalisation d'amenée pour le liquide et/ou mélange de liquide/solide à traiter et une canalisation pour le départ après traitement, une canalisation d'évacuation de gaz ainsi qu'un lit formé d'éléments de support pour microorganismes anaérobies, caractérisé en ce que, dans la canalisation d'arrivée (7) et dans la canalisation de sortie (10) pour le liquide et/ou mélange liquide/solide, ainsi que dans la canalisation d'évacuation de gaz (9) sont prévues, à chaque fois, des soupapes d'arrêt (14, 15, 16), et en ce que dans le réacteur 1, sont prévus des dispositifs de mesure (17, 18) de la pression et/ou du niveau du liquide et en ce que, de plus, la soupape d'arrêt (16) de la canalisation d'évacuation de gaz (9) ainsi que, le cas échéant, les soupapes d'arrêt (14 et 15) dans les canalisations d'arrivée (7) et de sortie (10) pour le liquide et/ou le mélange liquide/solide sont reliées aux dispositifs de mesure (17, 18) de pression et/ou de niveau de liquide dans le réacteur pour leur commande et/ou leur régulation.

5. Dispositif selon la revendication 4, caractérisé en ce que les dispositifs de mesure (17, 18) sont raccordés à un ensemble de régulation et/ou de commande (13) et en ce que les soupapes d'arrêt (14, 15 et 16) sont reliées à l'ensemble de commande et de régulation (13).

## Claims

1. A process for the anaerobic, bio' cal purification of organically highly charge uids and/ or liquid-solid mixtures, wherein tl. quids and/ or liquid-solid mixtures are fed through a reactor comprising a bed formed by carrier elements for micro-organisms and wherein the bed is periodically regenerated, characterised in that for the regeneration, the pressure in the reactor is initially increased by interrupting the gas discharge from the reactor and when a preselected high pressure has been reached is expanded to the original value.

2. A process as claimed in claim 1, characterised in that the pressure increase is carried out in part by interrupting the liquid supply to the reactor and in part by interrupting the liquid discharge from the reactor.

3. A process as claimed in claim 1 or claim 2, characterised in that the high pressure is set at 1 to 10 bar.

4. A device for carrying out the process claimed in one of the claims 1 to 3, comprising a reactor which is equipped with a supply line for liquids and/or liquid-solid mixtures which are to be treated and a discharge line for liquids and/or liquid-solid mixtures which have already been treated, a gas discharge line and a bed of carrier elements for anaerobic micro-organisms, characterised in that the supply line (7) and the discharge line (10) for liquids and/or liquid-solid mixtures and the gas discharge line (9) each contain a shut-off valve (14, 15, 16), the reactor (1) contains measuring devices (17, 18) for the pressure and/or the liquid level, and the shut-off valve (16) in the gas discharge line (9) and where appropriate the shut-off valves (14, 15) in the supply line (7) and the discharge line (10) for liquids and/or liquid-solid mixtures are linked with the pressure- and/or liquid level-measuring devices (17, 18) in the reactor (1) for control and/ or regulation purposes.

5. A device as claimed in claim 4, characterised in that the measuring devices (17, 18) are connected to a regulating- and/or control unit (13) and the shut-off valves (14, 15, 16) are linked to the regulating- and/or control unit (13).